# EUROPEAN PATENT APPLICATION

(11) **EP 3 825 893 A2**
(43) Date of publication of application: **26.05.2021**
(21) Application number: 21163456.3
(22) Date of filing: 18.03.2021
(51) Int. Cl.: G06F 40/14

(54) **METHOD OF AUTOMATED GENERATION OF SYMBOLICALLY-ENCODED GRAPHICS WITH USER GUIDANCE**

(71) Applicant: Institutul Roman De Stiinta Si Tehnologie, 400504 Cluj Napoca (RO)
(72) Inventor: Florian, Razvan Valentin, Cluj Napoca (RO); Davoudi, Homa, Venezia (IT)
(74) Representative: Vasilescu, Raluca

(57) **Abstract**

The invention is related to a computer-implemented method and a computing module for automated generation of symbolically-encoded graphics with user guidance comprising the steps of generating training data, training of a model, and use of the trained model, wherein after the training of the model using symbolically-encoded graphics, an autoencoder, a renderer, and an encoder, the model is used for generating symbolically-encoded graphics and its corresponding bitmap-represented graphics according to the user intent based on bitmap-represented graphics edited by the user by means of a graphical editor.

## Description

### Field of invention

The invention is related to the field of automatically generating graphics, where the graphics are represented with symbolic encodings and where the generation is guided interactively by a user such that the generated graphics correspond to the user intent. In particular the invention is related to the field of automatically generating web pages.

### Terms used in this invention

- Specific domain - refers to the type of graphics in the datasets used for training, validation and use, such as for example certain 2D graphics or 3D graphics.
- HTML - Hypertext Markup Language is the standard markup language for documents designed to be displayed in a web browser.
- CSS - Cascading Style Sheets is a style sheet language used for describing the presentation of a document written in a markup language such as HTML.
- XML - Extensible Markup Language.
- SVG - Scalable Vector Graphics is an XML-based vector image format for twodimensional graphics with support for interactivity and animation.
- COLLADA - defines an XML Namespace and database schema to make it easy to transport 3D assets between applications without loss of information, enabling diverse 3D authoring and processing tools to be combined into a content production pipeline.
- 2D - two dimensional.
- 3D - three dimensional.
- Renderer - a computer program that maps the symbolic encoding of a graphics to its bitmap representation. For example, a web browser maps the HTML/CSS/JavaScript encoding of a web page to a bitmap that may be displayed directly on a screen.
- Raster graphic or bitmap image - an image represented as a rectangular grid of pixels containing a shade or color value.
- Symbolic encoding of graphics - a representation that uses symbols, for example representing lines, shapes, various other types of content, etc. and coordinates and/or other attributes that define their position or appearance. Examples of symbolic encodings are HTML/CSS for web pages, SVG for 2D graphics, COLLADA for 3D graphics. This is to be contrasted with raster/bitmap/voxel-based representations of graphics.
- DSL - Domain Specific Language.

### Background of the invention, disadvantages of prior art

Graphics are a common means of displaying and communicating information. For example, a significant part of the information that users are processing is received as web pages, which are an example of 2D graphics. Other graphics of relevance for the current invention include logos, which are present in most commercial communications, or representations of 3D objects.

Creating high-quality graphics typically requires highly skilled specialists, who typically must specify, using specific computer programs, all details of the created graphics. This is typically time-consuming. This problem is intensified when graphics are represented with symbolic encodings, such as HTML/CSS for web pages, SVG for 2D images or COLLADA for 3D graphics, since such encodings require even more specialized skills for users to be able to successfully generate high-quality graphics. However, symbolic encodings are highly useful since they ensure, for example, that the graphics can be scaled to high resolutions without loss of quality, or that the content of web pages can be efficiently transferred remotely through computer networks and displayed in browsers.

A more recent alternative to the approach of users directly specifying all details of the graphics is the development of machine learning (ML)-based generators of graphics. Such ML-based generators are initially trained on many examples from the specific domain of interest and learn typical patterns in these examples, through so-called generative models. After training, such generators are able to generate new graphics that are similar to the examples in the training dataset. For example, the website https: / /thispersondoesnotexist.com/ generates realistic-looking images of human faces, although they are automatically generated and do not correspond to real persons. In such cases, the generated graphics are random (being constrained only by the statistics of the training dataset) and the user does not have control over the generation process in order to obtain something corresponding to a specific intent.

Existing options for allowing the average user to guide the generation process include supervised or unsupervised methods.

In supervised methods, specific labels or parameters are associated with the training examples, and during generation the user may specify the label or parameter values of the generated graphics. Labeling training examples is costly, and the necessary amount of labeled data is not always available.

Existing unsupervised methods extract automatically from the training examples some factors of variation, which may be then specified by the user during generation. For example, in the website https: / /generated.photos/faces that also automatically generates images of human portraits, the user may choose options for criteria such as front/left/right orientation of pose, sex, age, ethnicity, eye/hair color, hair length, and emotion. However, existing unsupervised methods provide only a limited number of such factors of variation, which may not be sufficient to properly reflect the user intent, especially in domains where there may be multiple and/or complex ways of categorizing or specifying the graphics contents, such as web pages or logos.

An alternative option for allowing the average user to guide the generation process is, instead of directly specifying factors of variation (generative factors or latent variables), to express her intent directly in the observable space of the generated graphics, by directly editing the graphics. In this interactive model, the generator provides the user with an initial version of the graphics (possibly randomly generated at the beginning, or just a blank canvas), takes the user's changes, and then the generator generates the next version of the graphics as close as possible to what the user indicated. The process is then iterated until the user is satisfied with the result. An example of this approach is introduced by Zhu et al (2016) [1] and is applied to an online shopping interface where interactive Generative Adversarial Networks (iGANs) were used to generate the product image based on the user intention. Considering shoe images, for instance, in that work, the manifold of latent representations of natural shoe images is learnt first. Passing a sampled vector from this manifold to the generator, a random real-looking shoe image is generated and presented to the user to modify by drawing rough sketches on it according to the user's intent. The resultant image, which is typically rough and unrealistic if the average user does not have good drawing skills, is then used as a hint for next image generation, such that its corresponding latent vector is found and used as a constraint in sampling the next image from the manifold.

Importantly, this latter method allows the user to express her intent in a rough and approximate way, while still resulting in a graphical output of relatively higher quality than what the user has drawn, since the generator uses the entire information learned from the training dataset in order to generate the graphics, rather than just what the user has drawn. This confers such systems significant advantages as compared to the classical situation where the user is directly drawing or building precisely the graphics, and where for high quality results the user typically needs to have specialized skills. By using such generative models average users are able to generate high quality graphics while still ensuring that the results correspond to their intent.

In Zhu et al (2016) and similar implementations of user-guided generative models, such as Wang et al (2018) [2], https: / /github.com/iunyanz/iGAN and https: / / gandissect.csail.mit.edu /, the generated graphics are represented as bitmaps (matrices of pixels and their color values), and the space where the user is expressing her intent as drawing are the same bitmaps. These bitmaps need to have a predefined size (resolution), which limits the graphical quality of the result. Larger sizes require increased computational needs which may be prohibitive.

However, for applications in fields such as web pages and vector graphics, the representation of the generated graphics must be a symbolic one - e.g., HTML/CSS for web pages, SVG for 2D vector graphics such as logos, COLLADA for 3D graphics. A renderer (e.g., a web browser) is then applied to the symbolic representation of the graphics in order to generate a bitmap representation that is directly accessible to the user. Vector graphics can be rendered to arbitrarily high resolutions, leading to high graphical quality even at high resolutions, in contrast to bitmap images of limited size.

The known methods from prior art for allowing the user to guide the generation process are not applicable to the generation of symbolically-represented graphics and therefore cannot be applied in application areas where such representations are required, such as generating web pages or vector graphics.

### Problem solved by the invention

The problem solved by the invention is to allow users to generate quickly and accurately high-quality graphics in the situations where the generated graphics have a symbolic encoding.

### Summary of the invention

In a **first aspect** of the invention it is provided a computer-implemented **method** for automated generation of symbolically-encoded graphics with user guidance comprising the steps of: 1.1. generating training data; 1.2. training of a model, and 1.3. use of the trained model,
1.1. The generating training data steps comprising:
   Extracting a dataset D containing a plurality of symbolically-encoded graphics Gₙ from a specific domain, the dataset D comprising a training subset D_{T} comprising a first plurality of symbolically-encoded graphics Gi,
1.2.The training of the model steps comprises:
   1.2.1.
      Mapping the first plurality of symbolically-encoded graphics Gi to a corresponding first plurality of latent encodings Li by a first encoder A₁ of an autoencoder A, and simultaneously
      Mapping the first plurality of latent encodings Li to a respective first plurality of symbolically-encoded reconstructions G'i of the symbolically-encoded graphics Gi by a first decoder A₂ of the autoencoder A,
   1.2.2.
      Training the first encoder A₁ and the first decoder A₂ of the autoencoder A using the first plurality of symbolically-encoded graphics Gi from the training subset of graphics D_{T} with the objective of mapping the first plurality of symbolically-encoded graphics Gi to the first plurality of symbolically-encoded reconstructions G'i such that to minimize the distances between each element of the first plurality of symbolically-encoded reconstructions G'i and the respective element from the first plurality of symbolically-encoded graphics Gi,
   1.2.3.
      Mapping the first plurality of symbolically-encoded graphics Gi to a corresponding first plurality of bitmap-represented graphics Bi by a renderer R,
   1.2.4.
      Mapping by a second encoder E the first plurality of bitmap-represented graphics Bi to a respective second plurality of latent encodings L'i of the first plurality of bitmap-represented graphics Bi,
   1.2.5.
      Training the second encoder E such that the second plurality of latent encodings L'i of the first plurality of bitmap-represented graphics Bi is on the manifold of the first plurality of latent encodings Li of the first plurality of symbolically-encoded graphics Gi from the training subset D_{T} and by applying one or both of the following:
      - minimizing the distances between each element of the second plurality of latent encodings L'i and the corresponding element of the first plurality of latent encodings Li;
      - minimizing the distances between each element of the first plurality of symbolically-encoded graphics Gi and the corresponding symbolically-encoded graphics A₂(L'ᵢ) resulted from applying the first decoder A₂ to the element from the second plurality of latent encodings L'i corresponding to the symbolically-encoded graphics Gi.
1.3. Use of the trained model steps comprises:
   1.3.1.
      Receiving from a user a current bitmap-represented graphics Bⱼ which includes a guidance input from the user in the form of a prior editing by the user of the current bitmap-represented graphics Bⱼ with a generic graphical editor.
   1.3.2
      Generating a latent encoding L'ⱼ of the current bitmap-represented graphics Bⱼ by said second encoder E and the L'ⱼ latent encoding's corresponding high quality symbolically-encoded graphics reconstruction G'ⱼ by said first decoder A₂.
   1.3.3.
      Rendering the symbolically-encoded graphics reconstruction G'ⱼ to a respective bitmap-represented graphics reconstruction B'j by said renderer R.
   1.3.4.
      Either continuing to step 1.3.6, or otherwise editing the current bitmap-represented graphics reconstruction B'j by using a graphical editor, resulting a user-edited immediately subsequent bitmap-represented graphics Bⱼ₊₁.
   1.3.5.
      Repeating the substeps 1.3.1. to 1.3.4. for a number of n iterations, n≥0, where if n>0 the user-edited subsequent bitmap Bⱼ₊₁ takes the place of the current bitmap-represented graphics representation Bⱼ, where j and n are natural numbers and 0≤j≤n.
   1.3.6
      Selecting, as output of the method, the high quality symbolically-encoded graphics G'ₙ and its corresponding rendered bitmap representation B'ₙ.

In a **second aspect** of the invention, it is provided a computing module configured for implementing the method in any of its embodiments. The computing module comprises:
- An autoencoder A comprising a first encoder A₁ and a first decoder A₂,
- A renderer R,
- A second encoder E,
- A graphical editor.

The invention extends to any novel aspects or features described and/or illustrated herein.

Any feature in one aspect of the invention may be applied to other aspects of the invention, in any appropriate combination. In particular, method features may be applied to machine-computing unit features, and vice versa.

Wherever applicable, means-plus-function features may be expressed alternatively in terms of their corresponding structure, such as a suitably programmed processor and associated memory.

Particular combinations of the various features of the invention can be implemented and/or supplied and/or used independently.

### Advantages of the invention

- The method enables average users to generate easily high-quality symbolically-encoded graphics according to their intent;
- The time that users need to allocate for generating high-quality symbolically-encoded graphics according to their intent is decreased in respect to prior art.

### Figures

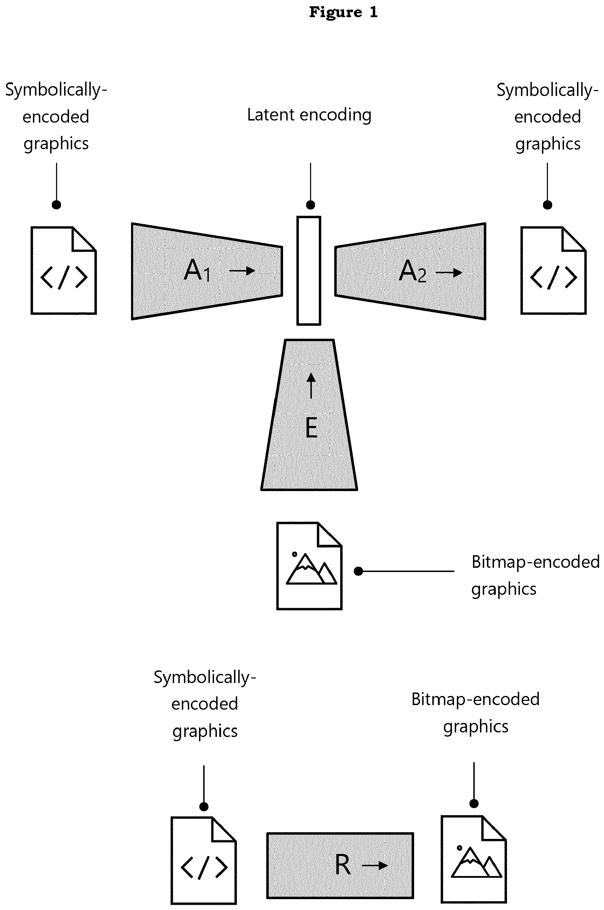

Figure 1 is a schematic representation of the method and of the computing module.

### Detailed description

With reference to Figure 1, the invention refers in its **first aspect** to a computer-implemented method for automated generation of symbolically-encoded graphics with user guidance and in its **second aspect** to a computing module for implementing the method. Said guidance of the user is carried out by input from a user sent to the computing module.

The method comprises three steps:
1.1. generating training data,
1.2. training of a model, and
1.3. use of the trained model.

### Step 1.1.

The computing module extracts a dataset D containing a plurality of symbolically-encoded graphics Gₙ from a specific domain, the dataset D comprising a training subset D_{T} comprising a first plurality of symbolically-encoded graphics Gi.
The step 1.1. is carried out according to prior art.

### Step 1.2.

The training of the model steps comprises five substeps.

In step 1.2.1, the first plurality of symbolically-encoded graphics Gi is mapped to a corresponding first plurality of latent encodings Lᵢ=A₁(Gᵢ) by a first encoder A₁ of an autoencoder A, and simultaneously the first plurality of latent encodings Li is mapped to a respective first plurality of symbolically-encoded reconstructions G'ᵢ=A₂(Lᵢ) of the symbolically-encoded graphics Gi by a first decoder A₂ of the autoencoder A.

In step 1.2.2., the first encoder A₁ and the first decoder A₂ of the autoencoder A of the computing module are trained using the first plurality of symbolically-encoded graphics Gi from the training subset of graphics D_{T} with the objective of mapping the first plurality of symbolically-encoded graphics Gi to the first plurality of symbolically-encoded reconstructions G'i such that to minimize the distances between each element of the first plurality of symbolically-encoded reconstructions G'i and the respective element from the first plurality of symbolically-encoded graphics Gi.

In step 1.2.3., a renderer R of the computing module maps the first plurality of symbolically-encoded graphics Gi to a corresponding first plurality of bitmap-represented graphics Bi=R(Gi).

In step 1.2.4., a second encoder E of the computing module maps the first plurality of bitmap-represented graphics Bi to a respective second plurality of latent encodings L'i=E(Bi).

Then, in step 1.2.5., the second encoder E is trained such that the second plurality of latent encodings L'i of the first plurality of bitmap-represented graphics Bi is on the manifold of the first plurality of latent encodings Li of the first plurality of symbolically-encoded graphics Gi from the training subset D_{T} and by applying one or both of the following:
- 1.2.5.1. Minimizing the distances between each element of the second plurality of latent encodings L'i=E(R(Gi)) and the corresponding element of the first plurality of latent encodings Lᵢ=A₁(Gᵢ);
- 1.2.5.2. Minimizing the distances between each element of the first plurality of symbolically-encoded graphics Gi and the corresponding symbolically-encoded graphics A₂(L'ᵢ)=A₂(E(R(Gᵢ))) resulted from applying the first decoder A₂ to the element from the second plurality of latent encodings L'i corresponding to the symbolically-encoded graphics Gi.

After the training steps 1.2., the computing module carries out the use of the trained model steps 1.3.

In step 1.3.1., the computing module receives from the user a current bitmap-represented graphics Bⱼ which includes a guidance input from the user in the form of a prior editing by the user of the current bitmap-represented graphics Bⱼ with a generic graphical editor. The current bitmap-represented graphics Bⱼ represents user's intent. Non-limiting examples of current bitmap-represented graphics Bⱼ are a rough sketch or a rough edit of an existing image.

Then, in step 1.3.2., the said second encoder E generates a latent encoding L'ⱼ=E(Bⱼ) of the current bitmap-represented graphics Bⱼ and then the first decoder A₂ generates the symbolically-encoded graphics reconstruction G'ⱼ=A₂(L'ⱼ) corresponding to the latent encoding L'ⱼ.

The symbolically-encoded graphics reconstruction G'ⱼ is rendered in step 1.3.3. by the said renderer R to a respective bitmap-represented graphics B'ⱼ. The symbolically-encoded graphic reconstruction G'ⱼ and its rendered bitmap representation B'ⱼ are expected to have higher quality than the initial user-provided bitmap-represented graphics Bⱼ, since they use the information learned by the computing module from the training steps 1.2. However, said bitmap-represented graphics B'ⱼ is generated to be similar to the current bitmap-represented graphics representation Bⱼ, according to the teachings of steps 1.2.5. and 1.2.2.

Either this continues with step 1.3.6., if the user is satisfied with the current symbolically-encoded graphics and its rendered bitmap representation, or otherwise, in step 1.3.4., a graphical editor of the computing module edits the current bitmap-represented graphics B'ⱼ resulting a user-edited immediately subsequent bitmap-represented graphics Bⱼ₊₁.

Steps 1.3.1. to 1.3.4. are repeated for a number of n≥0 iterations as step 1.3.5. where if n>0 the user-edited subsequent bitmap-represented graphics Bⱼ₊₁ takes the place of the current bitmap-represented graphics Bⱼ, where j and n are natural numbers and 0≤j≤n. This means, for example, that if the user is satisfied with the first bitmap reconstruction B'o, steps 1.3.1. to 1.3.4. are not repeated (n=0). If the user uses the user-edited immediately subsequent bitmap-represented graphics Bi as a basis for one new iteration, step 1.3.5. is applied with n=1. Step 1.3.5. may also be applied with n>1 if more iterations are involved.

When the user is satisfied, the high quality symbolically-encoded graphics G'ₙ and its corresponding rendered bitmap representation B'ₙ are selected in step 1.3.6. as output of the method.

The method enables average users to generate more easily high-quality symbolically-encoded graphics according to their intent, because the computing module uses the information learned from the training dataset during the training steps, when improving the current bitmap-represented graphics Bⱼ in order to generate the symbolically-encoded graphics reconstruction G'ⱼ and its rendered bitmap representation B'ⱼ, and also because the new graphics G'ⱼ is generated in a symbolically-encoded format which allows it to be rendered to high quality bitmaps. The method allows shortening the time that users need to allocate for generating high-quality symbolically-encoded graphics according to their intent because the computing module uses the information learned from the training data set during the training steps, when improving the current bitmap-represented graphics Bⱼ in order to generate the symbolically-encoded graphics reconstruction G'ⱼ and its rendered bitmap representation B'ⱼ, and therefore the users do not need to allocate lots of time to provide all details of the graphics they desire as an output of the process.

In a preferred embodiment of the invention, in order to bootstrap the iterative process of substeps 1.3.1. to 1.3.5.,
- a latent encoding L_{b} is sampled randomly from a specific region of the manifold defined by the first plurality of latent encodings Li of the first plurality of symbolically-encoded graphics Gi,
- a bitmap-represented reconstruction B_{b} resulted from applying to the latent encoding L_{b} the first decoder A₂ and then the renderer R is sent to the user prior to step 1.3.1. in order to be edited by the user.
   This has the advantage of not requiring the user to provide from outside the system an initial bitmap-represented graphics to be used at the start of the iterative process.

In another preferred embodiment of the invention, the second encoder E is developed in substeps 1.2.4. to 1.2.5., using the alternative 1.2.5.1. in step 1.2.5., as follows:
In substep 3.1., a second differentiable decoder F is trained using a plurality of latent encodings Lₖ and a corresponding plurality of bitmap-represented graphics Bₖ on which the second encoder E is trained, such that to minimize the plurality of distances between each of the bitmap-represented graphics F(Lₖ) and the corresponding bitmap-represented graphics Bₖ. The plurality of latent encodings Lₖ include the first plurality of latent encodings Li, and the plurality of bitmap-represented graphics Bₖ include the first plurality of bitmap-represented graphics Bi.

Then, in substep 3.2., the second encoder E is generated based on the second differentiable decoder F as follows: given a bitmap representing an image B_{f} as the input of the encoder, computing a corresponding latent encoding L_{f}=E(B_{f}) by an optimization method that minimizes a distance between the bitmap-represented graphics F(L_{f}) and the image B_{f} by backpropagating the gradient of the distance function through the second differentiable decoder F, keeping fixed the second differentiable decoder F.

The development of the second encoder E can take place both in the situation when the iterative process of substeps 1.3.1. to 1.3.5. is bootstrapped, or when the iterative process of substeps 1.3.1. to 1.3.5. is not bootstrapped.

In other embodiments of the invention, irrespective of when the iterative process of substeps 1.3.1. to 1.3.5. is or not bootstrapped, irrespective of how the development of the second encoder E is carried out, for the purpose of improving the performance of the method in generating relevant high-quality graphics in response to user input, the training of the second autoencoder E further includes, besides the first plurality of latent encodings Lᵢ=A₁(Gᵢ) of the first plurality of symbolically-encoded graphics Gi from the training dataset D_{T} and their corresponding first plurality of bitmap-represented graphics Bᵢ=R(Gi), further latent encodings Lₖ and their corresponding bitmap-represented graphics R(A₂(Lₖ)) resulted from applying the first decoder A₂ and then the renderer R to the latent encodings Lₖ. The latent encodings Lₖ are sampled from the manifold defined by the first plurality of latent encodings Li of the first plurality of symbolically-encoded graphics Gi from the training dataset D_{T}, such as sampled from lines that join in the latent encoding space pairs of points from the first plurality of latent encodings Lᵢ of the first plurality of symbolically-encoded graphics Gi from the training dataset D_{T}.

The improvement of the performance corresponding to the quality of the symbolically-encoded graphics reconstruction G'ⱼ in this case was observed experimentally, and is further detailed in the example of realization.

In order to validate the performance of specific implementations of the invention without the need of exposure to users, and in order to enhance the automatization of the training using objective criteria, the method as described above in any of its embodiments further comprises validation of the model, comprising two kind of steps:
i) Generating validation data steps taking place in the generating training data steps 1.1.
   In step 5.1., the complement of the training subset D_{T} is extracted in the dataset D as a validation subset Dᵥ, said validation subset Dᵥ comprising a second plurality of symbolically-encoded graphics G_{K},
ii) Validation of the model steps carried out after the training of the model steps:
   In step 5.2.1., the performance of the autoencoder A is validated by computing by the autoencoder A the second plurality of symbolically-encoded reconstructions G'_{K} of the second plurality of symbolically-encoded graphics G_{K} with the purpose of checking if the distances between each element of the second plurality of symbolically-encoded reconstructions G'_{K} and the corresponding element of the second plurality of symbolically-encoded graphics G_{K} are minimized according to the predetermined minimization criteria used in step 1.2.2.
   Then, in step 5.2.2., the performance of the second encoder E is validated by computing with E the plurality of latent encodings of the plurality of bitmap-represented graphics resulted from applying the renderer R to the second plurality of symbolically-encoded graphics G_{K}, and by computing with the first encoder A₁ the plurality of latent encodings of the second plurality of symbolically-encoded graphics G_{K}, with the purpose of checking if the distance between the latent encodings corresponding to each G_{K}, computed with the two methods, is minimized according to predetermined minimization criteria, as in step 1.2.5.1.

Hereafter are included some non-limiting examples of the method of the invention.

In one example, the symbolically-encoded graphics Gₙ are graphics representing web pages, the symbolic representation uses Hypertext Markup Language (HTML) together with Cascading Style Sheets (CSS) and the renderer R includes a web browser.

In an alternative example, the symbolically-encoded graphics Gₙ are graphics representing web pages, the symbolic representation is a Domain Specific Language (DSL), whereas the renderer R is a composition of a module that maps the Domain Specific Language (DSL) to standard representation of web pages using Hypertext Markup Language (HTML) and Cascading Style Sheets (CSS), and of a web browser.

From the point of view of the specific domain, hereafter are two examples for embodiments where the symbolically-encoded graphics Gₙ are not graphics representing web pages:
- in one example, the specific domain is 2D graphics, which may include logos or specific diagrams, and the graphics are represented vectorially, with a representation such as Scalable Vector Graphics (SVG), whereas
- in an alternative example, the specific domain is 3D graphics and the graphics are represented vectorially, with a representation such as COLLAborative Design Activity (COLLADA).

In a **second aspect** of the invention it is presented a computing module configured for implementing the method in any of its preferred embodiments. The computing module comprises:
- An autoencoder A comprising a first encoder A₁ and a first decoder A₂,
- A renderer R,
- A second encoder E,
- A graphical editor,

A non-limiting example of autoencoder A is a neural network, for example a neural network using Long Short Term Memory (LSTM) modules which were found experimentally to be suitable in a specific embodiment of the invention since they are able to deal with temporal dependencies in sequentially-presented inputs.

Another non-limiting example of autoencoder A is a hierarchical autoencoder that has the advantage of being able to deal with hierarchically-represented information in the symbolic representation of the graphics, as used, for example, by HTML, SVG or COLLADA.

The first encoder A₁ is configured to map the plurality of symbolically-encoded graphics Gi to a corresponding plurality of latent encodings Li.

The first decoder A₂ is configured to map the plurality of latent encodings Li to a respective plurality of symbolically-encoded reconstructions G'i of the symbolically-encoded graphics Gi.

The renderer R is configured to map the plurality of symbolically-encoded graphics Gi to a corresponding plurality of bitmap-represented graphics representations Bi.

Non-limiting examples of renderer R are as follows:
- The renderer R is a web browser, or
- The renderer R is a composition of a module that maps a Domain Specific Language (DSL) to standard representation of web pages using Hypertext Markup Language (HTML) and Cascading Style Sheets (CSS), and of a web browser.

The second encoder E is configured to map a plurality of bitmap representations Bi to a respective plurality of latent encodings L'i of the plurality of bitmap-represented graphics Bi.

The graphical editor is configured to edit the current bitmap-represented graphics B'ⱼ. The graphical editor is according to prior art.

A non-limiting example of the second encoder E is a convolutional neural network.

In other preferred embodiments where the second encoder E is not a standard convolutional neural network, the computing module further comprises a second differentiable encoder F.

A non-limiting example of the second differentiable encoder F is a convolutional neural network.

### Example of realization

In the example of realization, the invention was applied in the domain of generating web pages.

This generation does not aim to generate relevant content such as the actual text and images within the web page, which should be provided by the user independently of the generation process, but to generate the layout and the design of the web pages, with placeholder content that could be later edited by the user, or with automatically generated content that is done with methods beyond the scope of the current invention.

The web pages were represented symbolically using a Domain Specific Language (DSL) similar to the one used by Beltramelli (2018) [4]. The renderer R was a composition of a module that maps the Domain Specific Language (DSL) to standard representation of web pages using Hypertext Markup Language (HTML) and Cascading Style Sheets (CSS), and of a web browser.

For the autoencoder A, neural networks using Long Short Term Memory (LSTM) units were used, either plain ones or tree-structured ones (Tai, Socher, & Manning, 2015) [3]. Alternatively, transformer neural models were also used, but were found to have lower performance. After the autoencoder was trained, we have checked that it is able to generate new web pages that were not provided in the training dataset D_{T} by sampling latent encodings Lₖ from lines that join in the latent encoding space pairs of points from the first plurality of latent encodings Lᵢ=A₁(Gᵢ) of the first plurality of symbolically-encoded graphics Gi from the training dataset D_{T} and by checking that the corresponding generated web pages A₂(Lₖ) are of good quality.

The second encoder E used a second differentiable encoder F as disclosed in steps 3.1 and 3.2. The second differentiable encoder F was a convolutional neural network made of a stack of transposed convolutional layers networks with leaky ReLU units between them.

Alternatively, the second encoder E was a convolutional neural network trained as disclosed in alternative 1.2.5.2. of step 1.2.5.

We have experimentally observed that, if the encoder E is only trained using the first plurality of latent encodings Lᵢ=A₁(Gᵢ) of the first plurality of symbolically-encoded graphics Gi from the training dataset D_{T} and their corresponding first plurality of bitmap-represented graphics Bi=R(Gi), the first encoder A₁ and the second encoder E may have different partitioning of the latent space. For aligning their partitioning and therefore improving the performance of the system, we found that it was useful to provide supplementary training to the encoder E as disclosed in Claim 4.

While the description of the method and the computing module was disclosed in detail in connection to preferred embodiments, those skilled in the art will appreciate that various modifications and alterations of the present invention will be apparent to those skilled in the art without departing from the essential scope to the teaching of the invention and without diminishing its advantages. It is therefore intended that such modifications and alterations be covered by the appended claims.

### Bibliographical references

[1] Zhu JY., Krähenbühl P., Shechtman E., & Efros A.A. (2016). Generative Visual Manipulation on the Natural Image Manifold. In: Leibe B., Matas J., Sebe N., Welling M. (eds) Computer Vision - ECCV 2016. ECCV 2016. Lecture Notes in Computer Science, vol 9909, pp. 597-613. Springer. https://doi.org/10.1007/978-3-319-46454-1_36
[2] Wang, T. C., Liu, M. Y., Zhu, J. Y., Tao, A., Kautz, J., & Catanzaro, B. (2018). High-resolution image synthesis and semantic manipulation with conditional GANs. In Proceedings of the IEEE conference on computer vision and pattern recognition (pp. 8798-8807).
[3] Tai, K. S., Socher, R., & Manning, C. D. (2015). Improved semantic representations from tree-structured long short-term memory networks. arXiv preprint arXiv: 1503.00075.
[4] Beltramelli, T. (2018). pix2code: Generating code from a graphical user interface screenshot. In Proceedings of the ACM SIGCHI Symposium on Engineering Interactive Computing Systems (pp. 1-6).

## Claims

1. Computer-implemented method for automated generation of symbolically-encoded graphics with user guidance comprising the steps of: 1.1. generating training data; 1.2. training of a model, and 1.3. use of the trained model,
1.1. The generating training data steps comprising:
Extracting a dataset D containing a plurality of symbolically-encoded graphics Gₙ from a specific domain, the dataset D comprising:
• A training subset D_{T} comprising a first plurality of symbolically-encoded graphics Gi,
***characterized in that:***
1.2. The training of the model steps comprises:
1.2.1.
Mapping the first plurality of symbolically-encoded graphics Gi to a corresponding first plurality of latent encodings Li by a first encoder A₁ of an autoencoder A,
and simultaneously
Mapping the first plurality of latent encodings Li to a respective first plurality of symbolically-encoded reconstructions G'i of the symbolically-encoded graphics Gi by a first decoder A₂ of the autoencoder A,
1.2.2.
Training the first encoder A₁ and the first decoder A₂ of the autoencoder A using the first plurality of symbolically-encoded graphics Gi from the training subset of graphics D_{T} with the objective of mapping the first plurality of symbolically-encoded graphics Gi to the first plurality of symbolically-encoded reconstructions G'i such that to minimize the distances between each element of the first plurality of symbolically-encoded reconstructions G'i and the respective element from the first plurality of symbolically-encoded graphics Gi,
1.2.3.
Mapping the first plurality of symbolically-encoded graphics Gi to a corresponding first plurality of bitmap-represented graphics Bi by a renderer R,
1.2.4.
Mapping by a second encoder E the first plurality of bitmap-represented graphics Bi to a respective second plurality of latent encodings L'i of the first plurality of bitmap-represented graphics Bi,
1.2.5
Training the second encoder E such that the second plurality of latent encodings L'i of the first plurality of bitmap-represented graphics Bi is on the manifold of the first plurality of latent encodings Li of the first plurality of symbolically-encoded graphics Gi from the training subset D_{T} and by applying one or both of the following:
- 1.2.5.1. Minimizing the distances between each element of the second plurality of latent encodings L'i and the corresponding element of the first plurality of latent encodings Li;
- 1.2.5.2. Minimizing the distances between each element of the first plurality of symbolically-encoded graphics Gi and the corresponding symbolically-encoded graphics A₂(L'ᵢ) resulted from applying the first decoder A₂ to the element from the second plurality of latent encodings L'i corresponding to the symbolically-encoded graphics Gi.
1.3. Use of the trained model steps comprises:
1.3.1.
Receiving from a user a current bitmap-represented graphics Bⱼ which includes a guidance input from the user in the form of a prior editing by the user of the current bitmap-represented graphics Bⱼ with a generic graphical editor.
1.3.2
Generating a latent encoding L'ⱼ of the current bitmap-represented graphics Bⱼ by said second encoder E and the L'ⱼ latent encoding's corresponding symbolically-encoded graphics reconstruction G'ⱼ by said first decoder A₂.
1.3.3.
Rendering the symbolically-encoded graphics reconstruction G'ⱼ to a respective bitmap-represented graphics reconstruction B'ⱼ by said renderer R.
1.3.4.
Either continuing to step 1.3.6, or otherwise editing the current bitmap-represented graphics reconstruction B'ⱼ by using a graphical editor, resulting a user-edited immediately subsequent bitmap-represented graphics Bⱼ₊₁.
1.3.5.
Repeating the substeps 1.3.1. to 1.3.4. for a number of n iterations, n≥0, where if n>0 the user-edited subsequent bitmap Bⱼ₊₁ takes the place of the current bitmap-represented graphics representation Bⱼ, where j and n are natural numbers and 0≤j≤n.
1.3.6. Selecting, as output of the method, the high quality symbolically-encoded graphics G'ₙ and its corresponding rendered bitmap representation B'ₙ.

2. Computer-implemented method of claim 1, *wherein,* in order to bootstrap the iterative process of substeps 1.3.1. to 1.3.5.,
- a latent encoding L_{b} is sampled randomly from a specific region of the manifold defined by the first plurality of latent encodings Li of the first plurality of symbolically-encoded graphics Gi,
- a bitmap-represented reconstruction B_{b} resulted from applying the first decoder A₂ and then the renderer R to the latent encoding L_{b} is sent to the user prior to step 1.3.1 in order to be edited by the user.

3. Computer-implemented method of any of the claims 1 or 2, *wherein* the second encoder E is developed in substeps 1.2.4 to 1.2.5., using the alternative 1.2.5.1. in step 1.2.5., as follows:
3.1.
Training a second differentiable decoder F using a plurality of latent encodings Lₖ and a corresponding plurality of bitmap-represented graphics Bₖ on which the second encoder E is trained, such that to minimize the plurality of distances between each of the bitmap-represented graphics F(Lₖ) and the corresponding bitmap-represented graphics Bₖ. The plurality of latent encodings Lₖ include the first plurality of latent encodings Li, and the plurality of bitmap-represented graphics Bₖ include the first plurality of bitmap-represented graphics Bi,
3.2.
Generating the second encoder E based on the second differentiable decoder F as follows: providing a bitmap representing an image B_{f} as the input of the encoder; computing a corresponding latent encoding L_{f}=E(B_{f}) by an optimization method that minimizes the distance between the bitmap-represented graphics F(L_{f}) and the image B_{f} by backpropagating the gradient of the distance function through the second differentiable decoder F, keeping fixed the second differentiable decoder F.

4. Computer-implemented method of any of the claims 1 to 3, *wherein* for the purpose of improving the performance of the method in generating relevant high-quality graphics in response to user input, the training of the second autoencoder E further includes, besides the first plurality of latent encodings Lᵢ=A₁(Gᵢ) of the first plurality of symbolically-encoded graphics Gi from the training dataset D_{T} and their corresponding first plurality of bitmap-represented graphics Bi=R(Gi), further latent encodings Lₖ and their corresponding bitmap-represented graphics R(A₂(Lₖ)) resulted from applying the first decoder A₂ and then the renderer R to the latent encodings Lₖ. The latent encodings Lₖ are sampled from the manifold defined by the first plurality of latent encodings Li of the first plurality of symbolically-encoded graphics Gi from the training dataset D_{T}, such as sampled from lines that join in the latent encoding space pairs of points from the first plurality of latent encodings Li of the first plurality of symbolically-encoded graphics Gi from the training dataset D_{T}.

5. Computer-implemented method of any preceding claim, *wherein* the method comprises the following additional steps for the purpose of validation of the model:
5.1. Generating validation data steps:
Extracting the complement of the training subset D_{T} in the dataset D as a validation subset Dv, said validation subset Dv comprising a second plurality of symbolically-encoded graphics G_{K},
5.2. Validation of the model steps carried out after the training of the model steps:
5.2.1. Validating the performance of the autoencoder A by computing by the autoencoder A the second plurality of symbolically-encoded reconstructions G'_{K} of the second plurality of symbolically-encoded graphics G_{K} with the purpose of checking if the distances between each element of the second plurality of symbolically-encoded reconstructions G'_{K} and the corresponding element of the second plurality of symbolically-encoded graphics G_{K} are minimized according to the predetermined minimization criteria used in step 1.2.2.
5.2.2. Validating the performance of the second encoder E by computing with E the plurality of latent encodings of the plurality of bitmap-represented graphics resulted from applying the renderer R to the second plurality of symbolically-encoded graphics G_{K}, and by computing with the first encoder A₁ the plurality of latent encodings of the second plurality of symbolically-encoded graphics G_{K}, with the purpose of checking if the distance between the latent encodings corresponding to each G_{K}, computed with the two methods, is minimized according to predetermined minimization criteria, as in step 1.2.5.1.

6. Computer-implemented method of any preceding claim, *wherein:*
- the plurality of symbolically-encoded graphics Gₙ is a plurality of web pages;
- the symbolic representation is encoded using Hypertext Markup Language (HTML) together with Cascading Style Sheets (CSS).
- the renderer R includes a web browser.

7. Computer-implemented method of any of the claims 1 to 5, *wherein:*
- the plurality of symbolically-encoded graphics Gₙ is a plurality of web pages;
- the symbolic representation is a Domain Specific Language (DSL);
- the renderer R is a composition of:
o a module that maps the Domain Specific Language (DSL) to standard representation of web pages using Hypertext Markup Language (HTML) and Cascading Style Sheets (CSS);
o a web browser.

8. Computer-implemented method of any of the claims 1 to 5, *wherein:*
- the specific domain is 2D graphics, which may include logos or specific diagrams;
- the graphics are represented vectorially, with a representation such as Scalable Vector Graphics (SVG).

9. Computer-implemented method of any of the claims 1 to 5, *wherein:*
- the specific domain is 3D graphics;
- the graphics are represented vectorially, with a representation such as COLLAborative Design Activity (COLLADA).

10. Computing module ***characterized in that*** it comprises:
- An autoencoder A comprising a first encoder A₁ and a first decoder A₂,
- A renderer R,
- A second encoder E,
- A graphical editor,
*wherein* the module is configured for implementing the method of any of the claims 1 to 9.

11. Computing module of claim 10, *wherein* the autoencoder A is a neural network, preferably a neural network using Long Short Term Memory (LSTM) modules.

12. Computing module of any of the claims 10 to 11, *wherein* the autoencoder A is a hierarchical autoencoder.

13. Computing module of any of the claims 10 to 12, *wherein* the second encoder E is a convolutional neural network.

14. Computing module of any of the claims 10 to 12, *wherein* the computing module further comprises a second differentiable encoder F.

15. Computing module of claim 14, *wherein* the second differentiable encoder F is a convolutional neural network.
